(19) Europäisches Patentamt
European Patent Office
Office européen des brevets

(11) **EP 2 219 399 A1**

(12) **EUROPEAN PATENT APPLICATION**

(43) Date of publication:
**18.08.2010 Bulletin 2010/33**

(51) Int Cl.:
***H04W 16/10*** (2009.01)     ***H04W 16/14*** (2009.01)

(21) Application number: **09360012.0**

(22) Date of filing: **12.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Alcatel Lucent**
**75008 Paris (FR)**

(72) Inventors:
• **O'Caroll, Joseph**
 **TCE North Stand, Dublin 3 (IE)**

• **Claussen, Holger**
 **Swindon, Wiltshire**
 **SN5 3NJ (GB)**

(74) Representative: **Leppard, Andrew John et al**
 **Bryer, Shelley, John Amor, Greenwood LLP**
 **7 Gay Street**
 **Bath BA1 2PH (GB)**

Remarks:
Amended claims in accordance with Rule 137(2) EPC.

(54) **Allocating frequency channels of a femto cell**

(57)     A method of allocating frequency channels for transmissions between user equipment and a femto base station within a femto cell, a computer program product and a femto cell base station are disclosed. The frequency channels are for transmissions within a femto cell between user equipment and a femto base station, the femto cell being located within a local macro cell of a wireless telecommunications network, the wireless telecommunications network supporting transmissions over a plurality of predetermined frequency channels. The method comprises the steps of: determining at least one macro cell frequency channel from the plurality of predetermined frequency channels currently allocated for transmissions within the local macro cell between other user equipment and a macro base station supporting the local macro cell; and allocating at least one femto cell frequency channel from the plurality of predetermined frequency channels which differs from the at least one macro cell frequency channel for transmissions within the femto cell between the user equipment and the femto base station. In this way, the amount of interference contributed to existing transmission within the macro cell is limited. This helps to ensure that the interference experienced by user equipment within the macro cell is limited.

FIG. 3

**Description**

FIELD OF THE INVENTION

The present invention relates to a method of allocating frequency channels for transmissions between user equipment and a femto base station within a femto cell, a computer program product and a femto cell base station.

BACKGROUND TO THE INVENTION

It is known to provide so-called "femto cells" within macro cells of a telecommunications network. Such femto cells are typically provided where the communications coverage provided by the macro cell is poor or where a user wishes to use an alternative communications link provided locally, by the femto cell, to communicate with the core network. Such a situation might arise where, for example, a user has a pre-existing communications link at home or in an office and the user wishes to utilise that link in preference to that provided by a macro cell network provider to communicate with the core network. A femto base station generates the femto cell in its vicinity. To enable the user equipment to communicate with the femto base station, the femto base station reuses the same frequency channel as the macro cell on which a broadcast channel is transmitted and, once communication between the user equipment and the femto base station has been established, a data channel is formed between the user equipment and the femto base station to enable data transmission to occur.

However, whilst the utilisation of femto cells enables improved communication between user equipment and the core network to occur, the proliferation of femto cells within the network can cause undesirable consequences.

Accordingly, it is desired to provide an improved technique for generating a femto cell.

SUMMARY OF THE INVENTION

According to a first aspect of the present invention, there is provided a method of allocating frequency channels for transmissions within a femto cell between user equipment and a femto base station, the femto cell being located within a local macro cell of a wireless telecommunications network, the wireless telecommunications network supporting transmissions over a plurality of predetermined frequency channels, the method comprising the steps of: determining at least one macro cell frequency channel from the plurality of predetermined frequency channels currently allocated for transmissions within the local macro cell between other user equipment and a macro base station supporting the local macro cell; and allocating at least one femto cell frequency channel from the plurality of predetermined frequency channels which differs from the at least one macro cell frequency channel for transmissions within the femto cell between the user equipment and the femto base station.

The first aspect recognises that a problem with reusing the same frequency channels within the macro cell is that such reuse may cause interference to communications between the macro cell base station and other user equipment within that macro cell. This limits the extent of reuse possible because the there is only a finite amount of interference which can be tolerated within the macro cell without adversely affecting quality of service.

Accordingly, the frequency channels utilised within the macro cell within which the femto cell resides are determined from all of the frequency channels supported by the wireless telecommunications network. A frequency channel other than those frequency channels currently allocated within that macro cell is then allocated to support transmission within the femto cell. It can be seen that rather than reusing the existing frequency channels used within the macro cell for transmission within the femto cell, a frequency channel currently not in use by the macro cell is used. In this way, the amount of interference contributed to existing transmission within the macro cell is limited. This helps to ensure that the interference experienced by user equipment within the macro cell is limited.

In one embodiment, the step of determining the at least one macro cell frequency channel comprises: monitoring at least one broadcast control channel transmitted for the plurality of predetermined frequency channels and identifying said at least one macro cell frequency channel from that broadcast control channel received having a highest power level. By monitoring broadcast control channels it is possible to identify those frequency channels currently in use within the macro cell. The channels are determined to be those associated with the broadcast control channel received with the strongest signal level by the user equipment. It will be appreciated that existing functionality within user equipment to perform such measurements may be utilised. Alternatively, sniffing functionality within the femto base station may be utilised. If a channel allocation table is available to the femto base station from the core network, then it is possible to also determine, from the frequency channels having the highest power level, which sector the femto cell is located. Those frequency channels used within that sector are determined not to be available for the femto cell to reuse, whereas all other frequency channels are determined to be available for reuse.

In embodiments, the step of identifying comprises: decoding that broadcast channel received having the highest power level to determine the at least one macro cell frequency channel from the plurality of predetermined frequency channels currently allocated for transmissions within the local macro cell.

It will be appreciated that a problem with reusing frequency channels from other macro cells is that such reuse, if unrestrained, may cause unacceptable interference to transmission within those macro cells.

In one embodiment, the step of allocating the at least one femto cell frequency channel comprises: allocating the at least one femto cell frequency channel to support transmission of an uplink and a downlink signal between the user equipment and the femto base station, the method comprising the step of: determining a maximum uplink transmission power for the uplink signal which limits interference received at a macro base station currently utilising that frequency channel for transmissions with other user equipment to below a predetermined uplink interference threshold. Accordingly, frequency channels are allocated to support the transmission of uplink and downlink signals between the user equipment and the femto base station. The uplink transmission power is limited to ensure that the power of this transmission when received at the nearest macro base station utilising that frequency channel is below an amount which is likely to cause unacceptable interference at the macro base station. In this way, any reuse of a frequency channel for the uplink signal is constrained to ensure that that reuse does not unacceptably interfere with other uplink transmissions.

In one embodiment, the step of determining the maximum uplink transmission power for the uplink signal comprises the step of: utilising a predetermined maximum uplink interference threshold and an uplink path loss to determine the maximum uplink transmission power for the uplink signal transmitted from the user equipment to the femto base station, the predetermined maximum uplink interference threshold being that interference level below which the macro base station currently utilising that frequency channel can extract transmissions from the other user equipment and the uplink path loss being that signal loss between the macro base station currently utilising that frequency channel and the user equipment measured when monitoring the broadcast control channel. Hence, the uplink transmission power is determined using the path loss between the user equipment and the macro base station measured by the user equipment when monitoring broadcast control channel. This path loss indicates the signal attenuation between the user equipment and the macro base station. A high path loss would enable a higher transmission power to be used whilst still ensuring that the signal received at the macro base station still remains below an interference threshold level above which would cause unacceptable interference to other uplink transmissions on that channel.

In one embodiment, the step of determining comprises: calculating the maximum uplink transmission power for the uplink signal in accordance with the algorithm:

$$P_{ul} = \min\left\{\left(\frac{P_{\text{int}\,ul}}{n_{femto}}\right) + L_{measured}, P_{ul\,\max}\right\}$$

where $P_{ul}$ is the maximum uplink transmission power for the uplink signal, $P_{intul}$ is the predetermined maximum uplink interference threshold, nfemto is an indication of the number of femto cells contributing to interference received by the macro base station currently utilising that frequency channel for transmissions with other user equipment, $L_{measured}$ is the uplink path loss and $P_{ulmax}$ is a predetermined maximum uplink transmission power to cap the transmission power to a predetermined limit. Accordingly, the path loss on every channel between the user equipment and the macro cell base station transmitting on that channel is obtained during the monitoring of the broadcast control channel. The maximum interference allowable at that base station is predetermined, typically set by a Standard, and an indication of the number of femto cells likely to contribute to that interference is determined (either by the femto base station itself through its monitoring of other femto base stations or this information is provided by the core network) in order to establish the proportion of that interference margin which may be utilised by any one particular femto cell. Once this interference allowance is established for each of the frequency channels available for reuse, the transmission power of the uplink signal is set such that the transmitted power less the measured path loss to the macro base station is at or below the maximum allowable interference allocation for a single femto cell, subject to the transmission power not exceeding a predetermined maximum value.

In one embodiment, the step of allocating the at least one femto cell frequency channel comprises: allocating the at least one femto cell frequency channel to support transmission of an uplink and a downlink signal between the user equipment and the femto base station, the method comprising the step of: determining a maximum downlink transmission power for the downlink signal which limits downlink interference received at a macro cell boundary between the local macro cell and a macro cell supported by the macro base station currently utilising that frequency channel for transmissions with other user equipment to below a predetermined downlink interference threshold. Accordingly, a maximum downlink transmission power is determined such that the interference received at the boundary of the local macro cell and that macro cell utilising the frequency channel remains below a predetermined amount likely to cause unacceptable interference within that macro cell. In this way, a frequency channel may be reused without causing undue interference within an adjacent macro cell which utilises that frequency channel.

In one embodiment, the step of determining the maximum downlink transmission power for the downlink signal comprises the steps of: estimating a distance from the femto cell base station to the macro cell boundary; and utilising a predetermined maximum downlink interference threshold and a downlink path loss to determine the maximum downlink transmission power for the downlink signal transmitted from the femto base station to the user equipment, the predetermined maximum downlink interference threshold being that downlink interference level below which the other user equipment at the macro cell boundary can extract transmissions from the macro base station currently utilising that frequency channel and the downlink path loss being that estimated signal loss between the femto base station and the macro cell boundary calculated using a path loss curve describing a relationship between path loss and distance from the femto base station. Accordingly, a distance from the femto cell base station to the boundary between the local macro cell and the macro cell performing transmissions on the selected frequency channel is determined. Once the distance to the boundary is known then the path loss information can be used to estimate the path loss of a transmitted signal to the boundary. That path loss can then be used, in conjunction with a predetermined interference threshold above which unacceptable interference will occur at the cell boundary, in order to determine a maximum transmission power for the downlink signal.

In one embodiment, the step of estimating comprises the steps of: estimating a distance from the dominant base station from a path loss indicator provided by the broadcast control channel received having the highest power level; calculating a signal to interference plus noise ratio from a received power level provided by the broadcast control channel received having the highest power level and an interference power level provided by broadcast control channels using the same frequency channel; determining a change in path loss required at the femto cell base station to the macro cell boundary by determining a change in received power level and interference power required to achieve a predetermined minimum signal to interference plus noise ratio required to have macro cell coverage at the femto cell base station to the macro cell boundary; determining a boundary path loss required to the femto cell base station to the macro cell boundary from the path loss indicator and the change in path loss required; estimating a distance from the dominant base station to the macro cell boundary from the boundary path loss required; and deriving the distance from the femto cell base station to the macro cell boundary from the distance from the dominant base station and the distance from the dominant base station to the macro cell boundary.

In one embodiment, the step of determining comprises calculating the maximum downlink transmission power in accordance with the algorithm:

$$ P_{dl} = \min\left\{ \left( \frac{P_{int\,bound}}{n_{femto}} \right) + L_{est}, P_{dl\,max} \right\} $$

where $P_{dl}$ is the maximum downlink transmission power for the downlink signal, $P_{infbound}$ is the predetermined downlink interference threshold at the boundary, nfemto is an indication of the number of femto cells contributing to interference at said boundary, Lest is the downlink path loss estimated to the boundary and $P_{dlmax}$ is a predetermined maximum downlink transmission power to cap the transmission power to a predetermined limit.

In one embodiment, the step of determining the at least one macro cell frequency channel comprises: receiving an indication of the at least one macro cell frequency channel from a femto cell gateway server. Accordingly, rather than measuring received power for each transmission channel, a femto cell gateway server may be configured to store details of the location of each femto cell and, from that information derive which cell and therefore which transmission channels are currently being utilised by the macro cell within which the femto cell resides.

According to a second aspect of the present invention, there is provided a computer program product operable, when executed on a computer, to perform the method steps of the first aspect.

According to a third aspect of the present invention there is provided a femto base station operable to allocate frequency channels for transmissions with user equipment within a femto cell, the femto cell being located within a local macro cell of a wireless telecommunications network, the wireless telecommunications supporting transmissions over a plurality of predetermined frequency channels, the femto base station comprising: determining logic operable to determine at least one macro cell frequency channel from the plurality of predetermined frequency channels currently allocated for transmissions within the local macro cell between other user equipment and a macro base station supporting that local macro cell; and allocating logic operable to allocate at least one femto cell frequency channel from the plurality of predetermined frequency channels which differs from the at least one macro cell frequency channel for transmissions within the femto cell between the user equipment and the femto base station.

In one embodiment, the determining logic is operable to monitor a broadcast control channel transmitted for each of the plurality of predetermined frequency channels and identify those frequency channels having a highest power level as the at least one macro cell frequency channel.

In one embodiment, the allocating logic is operable to allocate the at least one femto cell frequency channel to support transmission of an uplink and a downlink signal between the user equipment and the femto base station and to determine a maximum uplink transmission power for the uplink signal which limits interference received at a macro base station currently utilising that frequency channel for transmissions with other user equipment to below a predetermined uplink interference threshold.

In one embodiment, the allocating logic is operable to utilise a predetermined maximum uplink interference threshold and an uplink path loss to determine the maximum uplink transmission power for the uplink signal transmitted from the user equipment to the femto base station, the predetermined maximum uplink interference threshold being that interference level below which the macro base station currently utilising that frequency channel can extract transmissions from the other user equipment and the uplink path loss being that signal loss between the macro base station currently utilising that frequency channel and the user equipment measured when monitoring the broadcast control channel.

In one embodiment, the allocating logic is operable to calculate the maximum uplink transmission power for the uplink signal in accordance with the algorithm:

$$P_{ul} = \min\left\{\left(\frac{P_{\text{int } ul}}{n_{femto}}\right) + L_{measured}, P_{ul\,\max}\right\}$$

where $P_{ul}$ is the maximum uplink transmission power for the uplink signal, $P_{intul}$ is the predetermined maximum uplink interference threshold, nfemto is an indication of the number of femto cells contributing to interference received by the macro base station currently utilising that frequency channel for transmissions with other user equipment, $L_{measured}$ is the uplink path loss and $P_{ulmax}$ is a predetermined maximum uplink transmission power to cap the transmission power to a predetermined limit.

In one embodiment, the allocating logic is operable to allocate the at least one femto cell frequency channel to support transmission of an uplink and a downlink signal between the user equipment and the femto base station and determine a maximum downlink transmission power for the downlink signal which limits downlink interference received at a macro cell boundary between the local macro cell and a macro cell supported by the macro base station currently utilising that frequency channel for transmissions with other user equipment to below a predetermined downlink interference threshold.

In one embodiment, the allocating logic is operable to estimate a distance from the femto cell base station to the macro cell boundary and utilise a predetermined maximum downlink interference threshold and a downlink path loss to determine the maximum downlink transmission power for the downlink signal transmitted from the femto base station to the user equipment, the predetermined maximum downlink interference threshold being that downlink interference level below which the other user equipment at the macro cell boundary can extract transmissions from the macro base station currently utilising that frequency channel and the downlink path loss being that estimated signal loss between the femto base station and the macro cell boundary calculated using a path loss curve describing a relationship between path loss and distance from the femto base station.

In one embodiment, the allocation logic is operable to estimate a distance from the dominant base station from a path loss indicator provided by the broadcast control channel received having the highest power level; calculate a signal to interference plus noise ratio from a received power level provided by the broadcast control channel received having the highest power level and an interference power level provided by broadcast control channels using the same frequency channel; determine a change in path loss required at the femto cell base station to the macro cell boundary by determining a change in received power level and interference power required to achieve a predetermined minimum signal to interference plus noise ratio required to have macro cell coverage at the femto cell base station to the macro cell boundary; determine a boundary path loss required to the femto cell base station to the macro cell boundary from the path loss indicator and the change in path loss required; estimate a distance from the dominant base station to the macro cell boundary from the boundary path loss required; and derive the distance from the femto cell base station to the macro cell boundary from the distance from the dominant base station and the distance from the dominant base station to the macro cell boundary.

In one embodiment, the allocating logic is operable to calculate the maximum downlink transmission, power in accordance with the algorithm:

$$P_{dl} = \min\left\{\left(\frac{P_{int\,bound}}{n_{femto}}\right) + L_{est}, P_{dl\,max}\right\}$$

where $P_{dl}$ is the maximum downlink transmission power for the downlink signal, $P_{intbound}$ is the predetermined downlink interference threshold at the boundary, $n_{femto}$ is an indication of the number of femto cells contributing to interference received at the boundary of the macrocell currently utilising that frequency channel for transmissions with other user equipment, $L_{est}$ is the downlink path loss estimated to the boundary and $P_{dlmax}$ is a predetermined maximum downlink transmission power to cap the transmission power to a predetermined limit.

In one embodiment, the determining logic is operable to receive an indication of the at least one macro cell frequency channel from a femto cell gateway server.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

Embodiments of the present invention will now be described further, with reference to the accompanying drawings, in which:

Figure 1 illustrates the main components of a wireless telecommunications network according to one embodiment;
Figure 2 illustrates an example femto cell deployment within one macro cell shown in Figure 1;
Figure 3 illustrates a typical macro cell frequency channel allocation where each macro cell sector has three available frequency channels;
Figure 4 is a flowchart illustrating the main processing steps of a femto base station;
Figure 5 shows a distance relationship between a macro base station and a femto base station;
Figure 6 is a flowchart illustrating the main processing steps of a femto base station when deriving a distance to a macrocell boundary;
Figure 7 shows an example path loss curve;
Figure 8 shows an example signal to interference power curve; and

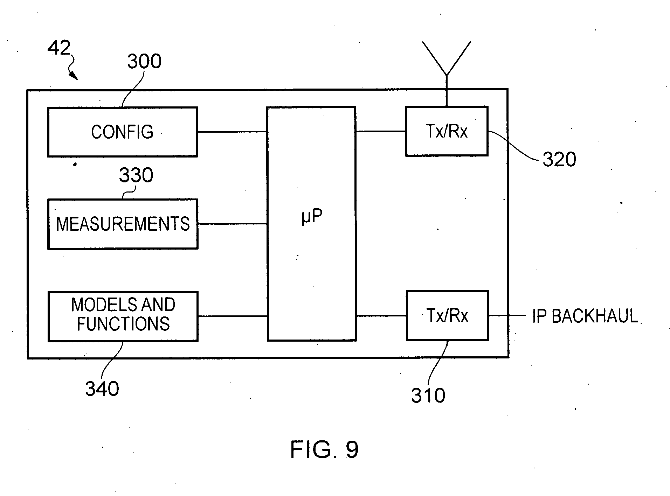

Figure 9 is a schematic diagram illustrating the main components of a femto base station.

DESCRIPTION OF THE EMBODIMENTS

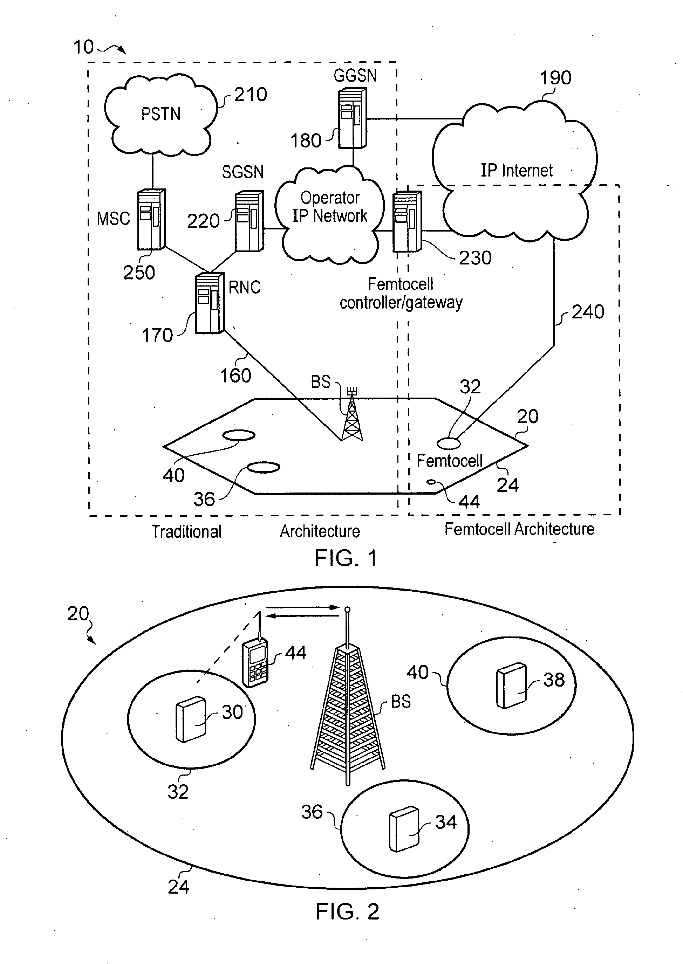

Figure 1 illustrates a wireless communication system, generally 10, according to one embodiment. User equipment 44 roam through the wireless communication system 10. Base stations BS are provided which support respective macro cells 24. A number of such base stations are provided, which are distributed geographically in order to provide a wide area of coverage to the user equipment 44. When user equipment 44 is within a macro cell 24 supported by the base station BS then communications may be established between the user equipment 44 and the base station BS over an associated radio link. Each base station typically supports a number of sectors (not shown). Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 10 is managed by a radio network controller 170. The radio network controller. 170 controls the operation of the wireless communications system 10 by communicating with the base stations BS over a backhaul communications link 160. The network controller 170 also communicates with the user equipment 44 via their respective radio links in order to efficiently manage the wireless communication system 10.

The radio network controller 170 maintains a neighbour list which includes information about the relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) BS0 and a gateway general packet radio support node (GGSN) 180. The GGSN then communicates with a packet-switch core 190 such as, for example, the Internet.

As shown in more detail in Figure 2, there are provided femto cell base stations 30, 34, 38 each of which provides a femto cell 32, 36, 40 in the vicinity of a building (not shown) within which the associated femto cell base station is installed. The femto cells 32, 36, 40 provide local communications coverage for a user in the vicinity of those buildings. Each femto cell base station 30, 34, 38 communicates via a femtocell controller/gateway 230. A handover or camping event may occur between the base station BS and the femto cell base stations 30, 34, 38 when the femto base stations 30, 34, 38 detect that user equipment comes within range. The femto cell base stations 30, 34, 38 typically utilise the user's broadband Internet connection 240 (such as ADSL, Cable, etc) as a backhaul.

Femto cell base stations 30, 34, 38 are low-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations 30, 34, 38 are provided locally by customers. Such femto cell base stations 30, 34, 38 provide local coverage in areas of the macro network where quality of service may be low. Hence, the femto cell base stations 30, 34, 38 provide for improved quality of service in areas which are difficult for network operators. To reduce the cost of the femto base stations 30, 34, 38 and to reduce complexity and interference effects of the femto cell on other user equipment within the macro cell, the transmission power of the femto cell base station 30, 34, 38 is relatively low in order to restrict the size of the femto cell to a range of tens of metres or less. The femto cell base stations 30, 34, 38 have extensive auto-configuration and self-optimisation capability to enable a simply plug-and-play deployment. As such, they are designed to automatically integrate themselves into an existing macro cellular wireless network 20. In addition, some access point within the macro cellular network contains some functionality traditionally provided by the core network. One example is the base station router which integrates functions of the macro base station 20, RNC 170, SGSN BS0 and GGSN 180.

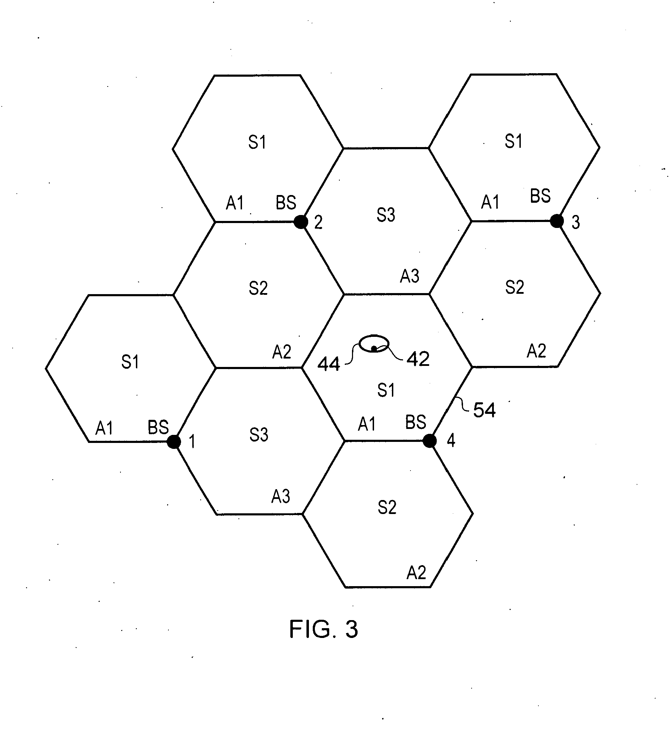

Figure 3 illustrates an example arrangement of a part of the wireless telecommunications network 10 in more detail. In this example, the network is a Global System for Mobile communications (GSM) network, although networks types may be supported. Four macro base stations $BS_1$ to $BS_4$ are illustrated. Each base station supports three sectors S 1 to S3. Each sector is allocated a group of frequency channels for use within that sector. For example, sector S 1 is allocated group A1, sector S2 is allocated group A2 and sector S3 is allocated group A3. A femto base station 42 (which is a further example of the femto base stations 30, 34, 38 described above) is, in this example arrangement, located in sector S1 of base station $BS_4$ (referred to as the local macro cell 54) and establishes a femto cell 44. Transmissions within sector S1 occur using the group of frequency channels A1. Each sector transmits a broadcast control channel for the group of frequency channels within that sector.

The femto base station 42 is operable to re-use some parts of the wireless spectrum, but the channel selection and transmission power is limited to ensure that significant interference does not occur to affect existing transmissions within either the local macro cell 54 within which the femtocell 44 is located or in other neighbouring macrocells or femtocells. In this way, additional spectrum resources are obtained for use by users.

Because the femto cell 44 is located within a sector which uses frequency group A 1, the femto base station 42 may only re-use frequency groups A2 and A3. The uplink and downlink powers for the femto cell transmissions are limited. This ensures that the received power at the macro cell base station which, for the selected transmission channel transmits the strongest powered signal on that channel, is some margin (for example, 20dB) below the existing interference level experienced at that macro base station. This also ensures that the received power at the cell boundaries is also some margin (for example 20dB) below the acceptable interference level at that boundary. The usable frequencies and power limits are configured based on measurements made by the user equipment under the control of the femto base station 42. Alternatively, the femto base station 42 may be provided with the functionality to perform these measurements itself. The allowable interference levels are calculated for each frequency channel resulting in the femto cell base station 42 and user equipment typically transmitting at different powers on each frequency channel. Transmissions within the femto cell 44 can potentially re-use any frequency channel not in use within the local macro cell 54. This helps to ensure that signal quality for user equipment within that macro cell 54 and close to the femto cell 44 does not degrade.

The main steps taken by the femto base station 42 are first to identify those frequency channels which may be re-used, then to determine a non-interfering uplink power for user equipment transmissions and then to determine a non-interfering downlink power for femto base station transmissions, as will be described in more detail below. Of course, it will be appreciated that the uplink and downlink power determination could be reversed.

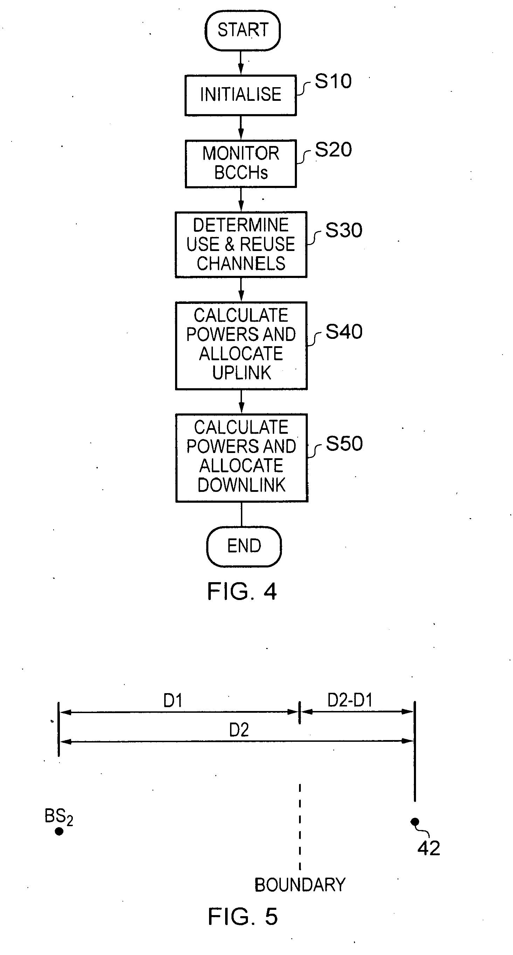

Figure 4 is a flowchart illustrating the main processing steps of the femto base station 42 shown schematically in Figure 5.

At step S10, processing commences. The femto base station 42 performs any auto-initialisation routines stored in the configuration logic 300 including, where supported, connection to the femtocell controller/gateway 230 using the transceiver 310 over the customer's IP backhaul. The femto base station 42 also identifies and communicates using the transceiver 320 with user equipment within the femto cell 44.

Frequency channel use determination

At step S20, the femto base station 42 instructs the user equipment to monitor all broadcast control channel (BCCH) signals on all available channels. The user equipment performs such monitoring and reports to the femto base station 42 the received transmission power levels on each broadcast control channel (BCCH), together with the measured path loss. Such measurement reporting is a standard function performed by typical user equipment. This information is stored by the femto base station in measurement storage 330.

At step S30, the femto base station 42 then determines, from the monitoring of the BCCH, the frequency channels in use in this sector. The "dominant" macro base station for a particular channel is considered to be that base station from which the user equipment receives the strongest signal on the associated BCCH. The BCCH provides a frequency map of the frequency channels in use within a particular sector. For example, if sector S 1 is using frequency group A 1 (say channels 1, 13, 25), then the BCCH provides a frequency map indicating channels 1, 13 and 25 are in use within that sector. As mentioned above, each sector provides a BCCH, hence a macro base station with 3 sectors provides 3 BCCHs, one for each supported sector. As will be well-known, the BCCH is a logical channel, provided typically on timeslot 1 of the lowest channel number used within a sector (i.e. on timeslot 1 of channel 1 for the example above). A measurement taken within femtocell located within sector S1 of macro base station $BS_4$ will therefore detect a BCCH from all the surrounding sectors, for example:

1) BCCH S 1 from $BS_4$ @ power -40db
2) BCCH S2 from $BS_3$ @ power-101 db
3) BCCH S3 from $BS_1$ @ power -89db
4) BCCH S2 from $BS_2$ @ power -90db
5) BCCH S3 from $BS_2$ @ power -95db, etc. (of course, other measurements will be made of other transmissions from other base stations/sectors).

The BCCH received with the strongest signal level determines the sector the femtocell is within and hence the dominant macrocell base station for the frequency group used locally (by macro-cell transmissions); in the above example this is sector S1 of macro base station $BS_4$. The femtocell base station decodes the BCCH and determines that frequency group A 1 (channels 1, 13, 25) is in use locally. The femtocell base station 42 then goes on to decode the other BCCH from the surrounding base stations. As such it determines that the dominant base stations for frequency groups A2 and A3 are macro base stations $BS_2$ and $BS_1$, respectively, since those base stations have the strongest BCCH for groups A2 and A3. In this way it can be seen that the femtocell base station 42 determines the channels which are available/ unavailable not by spectrum sensing (i.e. from the received power levels for each frequency channel/group) or from a "gateway server/controller" providing this information but rather by decoding the strongest BCCHs.

By utilising this technique within a femtocell it is possible to determine which frequencies can not be used locally. Although it is possible to use received power levels directly to determine which frequencies are in use and which are not, the method above is far more accurate and quicker. This is because in order to accurately determine which frequencies are in use within a sector, the femtocell would have to monitor all the frequency channels for potentially a long time (hours, even days) depending on network load, whereas the above method typically takes in the order of tens of milliseconds. The reason for this is that there is always (within its time slot) high power activity on the BCCH channel, whereas activity on the other channels is at a lower power and dependent of network conditions.

This frequency channel information can be used in conjunction with a channel allocation table to derive the sector within which the femto cell 44 is located. That strongest group of frequency channels are determined not to be available for femto base station 42 re-use. All other frequency channels are determined to be available for re-use. For example, in the arrangement shown in Figure 3, the femto base station 42 will instruct user equipment to monitor the BCCHs. The user equipment will report the measurements made to the femto base station 42. The femto base station 42 will determine from the BCCH having the strongest signal level which of the frequency channels are received with the greatest power. If a channel allocation table is available from, for example the femtocell controller/gateway 230, then the femto base station 42 will determine that the frequency group A1 is used within its sector and that the femto base station is located in sector S1. Accordingly the femto base station will determine that the remaining frequency groups A2 and A3, which contains all the other transmission channels, are available for re-use.

Uplink power

At step S40, the femto base station determines the allowable uplink power for transmissions from the user equipment to the femto base station on the available frequency channels. In determining the uplink power it is desirable to ensure that any interference caused by re-using a frequency channel for femto cell uplink transmissions does not damage the ability of the dominant macro base station using that frequency channel to decode transmissions from user equipment within its own macro cell. With knowledge of the maximum interference which can be received by the dominant macro base station without causing communication loss and with knowledge of the path loss to that dominant macro base station based on the measurements made by the user equipment it is possible to determine a maximum transmission power that may be used. If it is identified that more than one femto base station may potentially re-use the same frequency channel then, in order to prevent the interference levels at the dominant macro base station being exceeded, this "interference margin" may be split between those femto cells which could contribute to this interference. This information may be provided by the femtocell controller/gateway 230. Alternatively, the femto base station 42 may be preconfigured to assume a conservative contribution to this interference. Accordingly, once the portion of the interference margin is established for each of the frequency channels to be re-used, the femto base station 42 determines a maximum power output for transmissions on that frequency channel such that the transmitted power less the path loss to the dominant macro base station is at or below a maximum allowable interference level from a single femto cell. In particular, the power level is calculated as

$$P_{ul} = \min\left\{\left(\frac{P_{\text{int }ul}}{n_{femto}}\right) + L_{measured}, P_{ul\max}\right\}$$

where $P_{ul}$ is the maximum calculated uplink transmission power for the uplink signal, $P_{intul}$ is a predetermined maximum uplink interference threshold (set typically by a Standard), $n_{femto}$ is an indication of the number of femto cells contributing to interference received by the macro base station currently utilising that frequency channel for transmissions with other user equipment (this may be a predetermined conservative number, estimated by the femto base station based on the measurement reports or provided by the femtocell controller/gateway 230), $L_{measured}$ is the uplink path loss provided by the measurement report and $P_{ulmax}$ is a predetermined maximum uplink transmission power to cap the transmission power to remain below a predetermined limit. Typically, the frequency channel providing the highest uplink transmission channel is then allocated by the femto base station 42 for uplink transmissions within the femto cell 44.

Downlink power

At step S50, the femto base station 42 determines the downlink power for transmissions from the femto base station to the user equipment on the available frequency channels. In determining the downlink power it is desirable to ensure that the interference caused by the femtocell base station 42 on a particular frequency channel is limited at macro cell boundaries. In particular, the downlink power is limited such that the aggregate interference from all femtocell base stations, reusing a particular frequency channel, at the macrocell cell boundaries is limited to a predefined threshold below existing interference level for that frequency channel, subject to some maximum value. In other words, once an interference allowance is established for each of the frequency channels to be reused, the femtocell base station 42 must estimate the interference it causes at the cell boundary of the macrocell of the dominant macro base station and set its output power such that the transmitted power, less the path loss to the cell boundary, is at or below the maximum allowable interference from a single femtocell base station. The downlink power is calculated as:

$$P_{dl} = \min\left\{\left(\frac{P_{\text{int }bound}}{n_{femto}}\right) + L_{est}, P_{dl\max}\right\}$$

where $P_{dl}$ is the maximum downlink transmission power for the downlink signal, $P_{intbound}$ is the predetermined downlink interference threshold at the macrocell boundary, nfemto is an indication of the number of femto cells contributing to interference received at the boundary with the macro cell currently utilising that frequency channel for transmissions with other user equipment, $L_{est}$ is the downlink path loss estimated to the boundary and $P_{dlmax}$ is a predetermined maximum downlink transmission power to cap the transmission power to a predetermined limit.
An estimate of the path loss between the femtocell base station 42 and the cell boundary is obtained from an appropriate path loss model, using an estimate of the distance to the cell boundary.
Two methods for determining the distance to the cell boundary are envisaged.

Method 1 - Centralised determination

Femto base stations and macro base stations forward measurement reports detailing signal to interference measurements made within the network to the femtocell controller/gateway 230. Location information of the femto base stations and macro base stations is also forwarded to the femtocell controller/gateway 230. Given knowledge of the signal to interference for the entire area of macro cell coverage and the relative locations of all macro cell and femto cell base stations, it is possible to determine the areas where the signal to interference ratio, for the frequencies channels to be reused, is equal to the signal to interference ration for the frequencies channels used by macro cell within which the femtocell is located. The distance to the boundary is then determined based on this information.

Method 2 - Distributed determination

As shown in Figure 3, a femto base station 42 located within the coverage area of macro base station $BS_4$. The femto base station 42 wishes to reuse frequency group A2. Macro base station $BS_2$ is the dominant macro base station using frequency group A2; meaning, all other macro base stations provide a lower received signal strength on frequency group A2 at the femto cell 44.

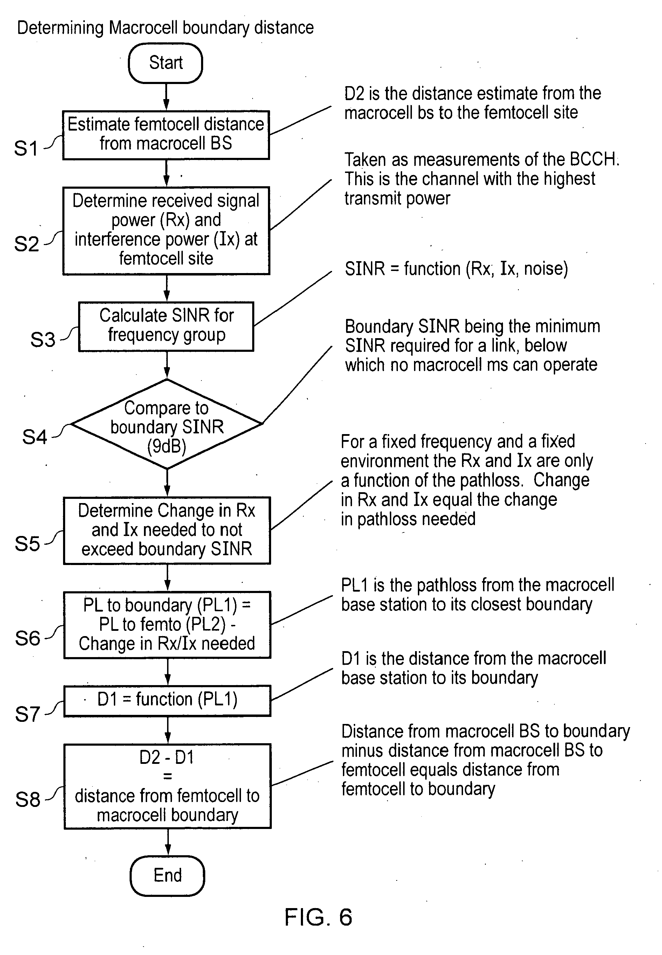

If no detailed knowledge on the macrocell deployment is available, the femto cell base station 42 determines the downlink power by measuring the following parameters: the path loss from its location to all immediate macro base stations; the signal power received (e.g. -90dB) from the dominant macro base station (e.g. $BS_2$ - for frequency group A2); the signal power received from the non-dominant macro base stations (e.g. -90dB which cumulatively includes -101 dB from $BS_3$ and signal power received from other base stations transmitting on this frequency group - this is the interference power). Additionally it is known from, for example, the relevant standard, the minimum SINR required for user equipment to make a connection to the macro base station, below which there is no macro cell coverage, and therefore no macrocell user equipment activity. As described in more detail in Figures 5 to 8, the distance from the femto base station to the macro cell boundary for the dominant base station (e.g. $BS_2$) using the frequency group to be reused (e.g. A2) is calculated using information contained in the measurement reports stored in the measurement storage 33 and models/functions stored in the model/function storage 340 within the femto base station 42.

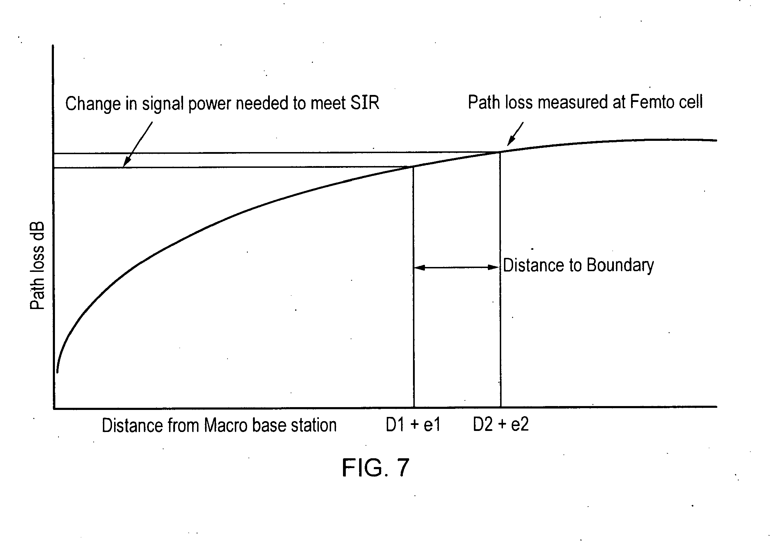

At step S1, the femto base station 42 derives, from the downlink measurement report, the actual path loss value at its location relative to the macrocell base stations whose channels the femtocell wishes to reuse. For a fixed frequency and environment, the pathloss is essentially a function of distance as shown in Figure 7 (i.e. Path loss = function(distance from BS). Therefore, the distance to the base station can be derived from the actual path loss if that function is known (i.e. distance D2 from BS to femtocell = inverse function(actual path loss)). Accordingly, the femto base station 42 knows the actual path loss and can estimate the distance D2 (plus an error amount e2) from the macro base station by utilising the inverse path loss function provided within the femto base station 42.

At step S2, the femto base station 42 determines the received power (from the dominant base station e.g. -90dB from $BS_2$) and the interference power (from other macro base stations also using that frequency group e.g. -90dB which includes -101 dB from $BS_3$) on the BCCH of the macro base station sector whose channels the femto base station 42 wishes to reuse.

At step S3, the femto base station 42 determines a signal to interference plus noise ratio (SINR) value (e.g. 0dB) for the channel group selected for use within the femtocell 44 using a SINR function provided within the femto base station 42.

At step S4, the femto base station 42 compares the SINR for the frequency group to the predetermined minimum value required to have macro cell coverage (e.g. 9dB at the macro cell boundary), a predetermined safety margin may also be included.

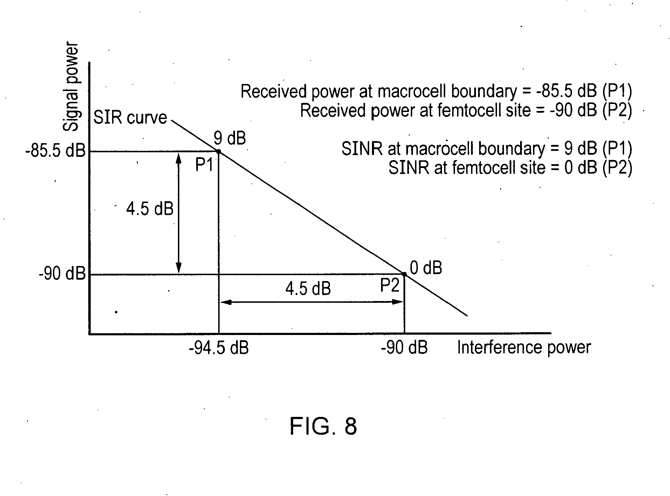

At step S5, the femto base station 42 determines the change in received power and interference power required to not exceed the boundary SINR level determined at step S4 (this is derivable from the SINR function shown in Figure 8 relating signal power to interference power - this function may assume a linear relationship where interference power is inversely proportional to received power, in this conservative example a decrease in signal power of 1dB results in an increase in interference power of 1 dB); this indicates the change in path loss required at the boundary with the macro cell of the dominant base station BS currently utilising that frequency group (e.g. 9.5dB).

The SINR to distance from dominant base station curve for the macrocell network is non-linear. However, if the distance between the femtocell and the macrocell boundary is small relative to the radius of the macro cell, the SINR curve may be approximated as linear between the macrocell boundary and the femtocell. If the distance between the femtocell and the macrocell boundary is large, then the approximation error will also be large. However, in such a case the femtocell is likely to reach is maximum allowable transmission power before it reaches its interference allowance, thus the approximation error is not of significant importance over large distances. Assuming a predetermined linear slope, the change in signal power/Interference power required to meet the SIR boundary condition can be estimated.

At step S6, the path loss to the boundary is derived from the actual path loss derived at step S1 and the change in path loss required derived at step S5 (i.e. path loss to boundary = actual path loss to femto base station 42 - change in path loss required).

At step S7, the femto base station 42 applies inverse path loss function to the path loss to the boundary derived at step S6 to estimate the distance D1 (plus an error amount e1) from the macro base station to the macrocell boundary (i.e. distance D1 from BS to macrocell boundary = inverse function(path loss).

At step S8, the distance from the femto base station 42 to the boundary can be derived from distances derived at steps S1 and S7 (i.e. distance from femto base station 42 to BS boundary = D2 (distance from BS to femto base station 42) - D1 (distance from BS to macrocell boundary).

The process is repeated for each channel group the femto base station 42 wishes to reuse and a corresponding effective transmission range (boundary distance) from the femtocell base station is established for each, within which no macrocell user equipment operates on the frequencies to be reused; the range varies depending on the frequencies to be reused. The longer the range, the more power the femto base station may use. For example, suppose the femto base station 42 wishes to reuse frequency groups A2 and A3, two transmission ranges are established, one for the A2 group and the other for the A3 group. The boundary distance estimate, for each frequency group to be reused, is applied to a path loss curve for the femto base station. From this curve an estimate of the path loss to the boundaries is obtained. These path loss estimates are used in the formula above to obtain the femto base station downlink transmit power on each frequency channel to be reused.

Over time the user equipment within femto cell 44 will obtain several values for both the path loss and SINR. These measurements can be used by the femto base station 42 to improve the path loss model and also the approximations made with regard to the SINR curve.

Likewise, collaboration with other local femtocells would improve the SINR curve approximation and since only SINR values are being exchanged no knowledge of their relative locations is required. However, if the femto base stations have knowledge of their real distances from the macro base stations, then they could exchange path loss - distance value pairs with each other and improve the path loss approximations as well. It will be appreciated that the key to this type of collaboration is locality. The cooperating femto base stations need to be close enough to each other for the information shared between them to be mutually relevant. As such whether or not two femtocells communicate would be based on how strongly they receive each other's broadcast control channel. The benefit of this approach is that a femto base station can decide locally who to collaborate with, removing the need for some centralised system to make that decision.

It will be appreciated that embodiments allow for the partial local reuse of the macro cell spectrum by a femto cell locally. This approach requires no knowledge of femto cell location as all auto configuration decisions are based on measurements taken locally; no knowledge of macrocell network; no network operator maintenance or input. The network operator may preset a boundary interference allowance, but the femto base station will be able to estimate its own allowance. SINR estimates can be optimised over time via femto cell user equipment measurements and collaboration between femto base stations. Path loss estimates can be optimised in a similar fashion, but require knowledge of the distance from the dominant macrocell base stations. If the path loss model is too conservative resulting in the distance to boundary estimate being farther then it is in reality, the power configuration which is based on the path loss model will also be conservative. If the path loss model is too optimistic resulting in the distance to boundary estimate being closer then it is in reality, the power configuration will also be optimistic.

Although illustrative embodiments of the invention have been disclosed in detail herein, with reference to the accompanying drawings, it is understood that the invention is not limited to the precise embodiments shown and that various changes and modifications can be effected therein by one skilled in the art without departing from the scope of the invention as defined by the appended claims and their equivalents.

**Claims**

1. A method of allocating frequency channels for transmissions within a femto cell between user equipment and a femto base station, said femto cell being located within a local macro cell of a wireless telecommunications network, said wireless telecommunications network supporting transmissions over a plurality of predetermined frequency channels, said method comprising the steps of:

   determining at least one macro cell frequency channel from said plurality of predetermined frequency channels currently allocated for transmissions within said local macro cell between other user equipment and a macro base station supporting said local macro cell; and
   allocating at least one femto cell frequency channel from said plurality of predetermined frequency channels which differs from said at least one macro cell frequency channel for transmissions within said femto cell between said user equipment and said femto base station.

2.   The method of claim 1, wherein said step of determining said at least one macro cell frequency channel comprises:

monitoring at least one broadcast control channel transmitted for said plurality of predetermined frequency channels and identifying said at least one macro cell frequency channel from that broadcast control channel received having a highest power level.

3.   The method of claim 2, wherein said step of identifying comprises:

decoding that broadcast channel received having said highest power level to determine said at least one macro cell frequency channel from said plurality of predetermined frequency channels currently allocated for transmissions within said local macro cell.

4.   The method of claim 3, wherein said step of allocating said at least one femto cell frequency channel comprises:

allocating said at least one femto cell frequency channel to support transmission of an uplink and a downlink signal between said user equipment and said femto base station, said method comprising the step of:

determining a maximum uplink transmission power for said uplink signal which limits interference received at a macro base station currently utilising that frequency channel for transmissions with other user equipment to below a predetermined uplink interference threshold.

5.   The method of claim 4, wherein said step of determining said maximum uplink transmission power for said uplink signal comprises the step of:

utilising a predetermined maximum uplink interference threshold and an uplink path loss to determine said maximum uplink transmission power for said uplink signal transmitted from said user equipment to said femto base station, said predetermined maximum uplink interference threshold being that interference level below which said macro base station currently utilising that frequency channel can extract transmissions from said other user equipment and said uplink path loss being that signal loss between said macro base station currently utilising that frequency channel and said user equipment measured when monitoring said broadcast control channel.

6.   The method of claim 5, wherein said step of determining comprises:

calculating said maximum uplink transmission power for said uplink signal in accordance with the algorithm:

$$P_{ul} = \min\left\{\left(\frac{P_{\text{int }ul}}{n_{femto}}\right) + L_{measured}, P_{ul\max}\right\}$$

where $P_{ul}$ is said maximum uplink transmission power for said uplink signal, $P_{intul}$ is a predetermined maximum uplink interference threshold, $n_{femto}$ is an indication of the number of femto cells contributing to interference received by said macro base station currently utilising that frequency channel for transmissions with other user equipment, $L_{measured}$ is said uplink path loss and $P_{ulmax}$ is a predetermined maximum uplink transmission power.

7.   The method of claim 3, wherein said step of allocating said at least one femto cell frequency channel comprises:

allocating said at least one femto cell frequency channel to support transmission of an uplink and a downlink signal between said user equipment and said femto base station, said method comprising the step of:

determining a maximum downlink transmission power for said downlink signal which limits downlink interference received at a macro cell boundary between said local macro cell and a macro cell supported by said macro base station currently utilising that frequency channel for transmissions with other user equipment to below a predetermined downlink interference threshold.

8.   The method of claim 7, wherein said step of determining said maximum downlink transmission power for said downlink signal comprises the steps of:

estimating a distance from said femto cell base station to said macro cell boundary; and
utilising a predetermined maximum downlink interference threshold and a downlink path loss to determine said maximum downlink transmission power for said downlink signal transmitted from said femto base station to said user equipment, said predetermined maximum downlink interference threshold being that downlink interference level below which said other user equipment at said macro cell boundary can extract transmissions from said macro base station currently utilising that frequency channel and said downlink path loss being that estimated signal loss between said femto base station and said macro cell boundary calculated using a path loss curve describing a relationship between path loss and distance from said femto base station.

9. The method of claim 8, wherein said step of estimating comprises the steps of:

estimating a distance from said dominant base station from a path loss indicator provided by said broadcast control channel received having said highest power level;
calculating a signal to interference plus noise ratio from a received power level provided by said broadcast control channel received having said highest power level and an interference power level provided by broadcast control channels using the same frequency channel;
determining a change in path loss required at said femto cell base station to said macro cell boundary by determining a change in received power level and interference power required to achieve a predetermined minimum signal to interference plus noise ratio required to have macro cell coverage at said femto cell base station to said macro cell boundary;
determining a boundary path loss required to said femto cell base station to said macro cell boundary from said path loss indicator and said change in path loss required;
estimating a distance from said dominant base station to said macro cell boundary from said boundary path loss required; and
deriving said distance from said femto cell base station to said macro cell boundary from said distance from said dominant base station and said distance from said dominant base station to said macro cell boundary.

10. The method of claim 8, wherein said step of determining comprises calculating said maximum downlink transmission power in accordance with the algorithm:

$$P_{dl} = \min\left\{\left(\frac{P_{\text{int bound}}}{n_{femto}}\right) + L_{est}, P_{dl\max}\right\}$$

where $P_{dl}$ is said maximum downlink transmission power for said downlink signal, $P_{intbound}$ is the predetermined downlink interference threshold allowable at said macro cell boundary, $n_{femto}$ is an indication of the number of femto cells contributing to interference at said boundary, $L_{est}$ is the downlink path loss estimated to the boundary and $P_{dlmax}$ is a predetermined maximum downlink transmission power.

11. The method of claim 1, wherein said step of determining said at least one macro cell frequency channel comprises:

receiving an indication of said at least one macro cell frequency channel from a femto cell gateway server.

12. A computer program product operable, when executed on a computer, to perform the method steps of claim 1.

13. A femto base station operable to allocate frequency channels for transmissions with user equipment within a femto cell, said femto cell being located within a local macro cell of a wireless telecommunications network, said wireless telecommunications supporting transmissions over a plurality of predetermined frequency channels, said femto base station comprising:

determining logic operable to determine at least one macro cell frequency channel from said plurality of predetermined frequency channels currently allocated for transmissions within said local macro cell between other user equipment and a macro base station supporting that local macro cell; and

allocating logic operable to allocate at least one femto cell frequency channel from said plurality of predetermined frequency channels which differs from said at least one macro cell frequency channel for transmissions within said femto cell between said user equipment and said femto base station.

**Amended claims in accordance with Rule 137(2) EPC.**

**1.** A method of allocating frequency channels for transmissions within a femto cell (32; 36; 40; 46) between user equipment (44) and a femto base station (30; 34; 38; 42), said femto cell being located within a local macro cell (24) of a wireless telecommunications network (10), said wireless telecommunications network supporting transmissions over a plurality of predetermined frequency channels, said method comprising the steps of:

determining (S20) at least one macro cell frequency channel from said plurality of predetermined frequency channels currently allocated for transmissions within said local macro cell between other user equipment and a macro base station (BS) supporting said local macro cell; and
allocating (S30) at least one femto cell frequency channel from said plurality of predetermined frequency channels which differs from said at least one macro cell frequency channel for transmissions within said femto cell between said user equipment and said femto base station, wherein said step of allocating said at least one femto cell frequency channel comprises:

allocating said at least one femto cell frequency channel to support transmission of an uplink and a downlink signal between said user equipment and said femto base station, said method comprising the step of:

determining (S50) a maximum downlink transmission power for said downlink signal which limits downlink interference received at a macro cell boundary between said local macro cell and a macro cell supported by a macro base station currently utilising that frequency channel for transmissions with other user equipment to below a predetermined downlink interference threshold.

**2.** The method of claim 1, wherein said step of determining said at least one macro cell frequency channel comprises:

monitoring at least one broadcast control channel transmitted for said plurality of predetermined frequency channels and identifying said at least one macro cell frequency channel from that broadcast control channel received having a highest power level.

**3.** The method of claim 2, wherein said step of identifying comprises:

decoding that broadcast channel received having said highest power level to determine said at least one macro cell frequency channel from said plurality of predetermined frequency channels currently allocated for transmissions within said local macro cell.

**4.** The method of claim 3, wherein said step of allocating said at least one femto cell frequency channel comprises:

allocating said at least one femto cell frequency channel to support transmission of an uplink and a downlink signal between said user equipment and said femto base station, said method comprising the step of:

determining (S40) a maximum uplink transmission power for said uplink signal which limits interference received at a macro base station currently utilising that frequency channel for transmissions with other user equipment to below a predetermined uplink interference threshold.

**5.** The method of claim 4, wherein said step of determining said maximum uplink transmission power for said uplink signal comprises the step of:

utilising a predetermined maximum uplink interference threshold and an uplink path loss to determine said maximum uplink transmission power for said uplink signal transmitted from said user equipment to said femto base station, said predetermined maximum uplink interference threshold being that interference level below which said macro base station currently utilising that frequency channel can extract transmissions from said other user equipment and said uplink path loss being that signal loss between said macro base station currently utilising that frequency channel and said user equipment measured when monitoring said broadcast control channel.

**6.** The method of claim 5, wherein said step of determining comprises:

calculating said maximum uplink transmission power for said uplink signal in accordance with the algorithm:

$$P_{ul} = \min\left\{ \left( \frac{P_{int\,ul}}{n_{femto}} \right) + L_{measured}, P_{ul\,max} \right\}$$

where $P_{ul}$ is said maximum uplink transmission power for said uplink signal, $P_{intut}$ is a predetermined maximum uplink interference threshold, $n_{femto}$ is an indication of the number of femto cells contributing to interference received by said macro base station currently utilising that frequency channel for transmissions with other user equipment, $L_{measured}$ is said uplink path loss and $P_{ulmax}$ is a predetermined maximum uplink transmission power.

**7.** The method of claim 1, wherein said step of determining said maximum downlink transmission power for said downlink signal comprises the steps of:

estimating (S1-S7) a distance from said femto cell base station to said macro cell boundary; and
utilising a predetermined maximum downlink interference threshold and a downlink path loss to determine said maximum downlink transmission power for said downlink signal transmitted from said femto base station to said user equipment, said predetermined maximum downlink interference threshold being that downlink interference level below which said other user equipment at said macro cell boundary can extract transmissions from said macro base station currently utilising that frequency channel and said downlink path loss being that estimated signal loss between said femto base station and said macro cell boundary calculated using a path loss curve describing a relationship between path loss and distance from said femto base station.

**8.** The method of claim 7, wherein said step of estimating comprises the steps of:

estimating a distance from a dominant base station currently utilising that frequency channel from a path loss indicator provided by said broadcast control channel received having said highest power level;
calculating a signal to interference plus noise ratio from a received power level provided by said broadcast control channel received having said highest power level and an interference power level provided by broadcast control channels using the same frequency channel;
determining a change in path loss required at said femto cell base station to said macro cell boundary by determining a change in received power level and interference power required to achieve a predetermined minimum signal to interference plus noise ratio required to have macro cell coverage at said femto cell base station to said macro cell boundary;
determining a boundary path loss required to said femto cell base station to said macro cell boundary from said path loss indicator and said change in path loss required;
estimating a distance from said dominant base station to said macro cell boundary from said boundary path loss required; and
deriving said distance from said femto cell base station to said macro cell boundary from said distance from said dominant base station and said distance from said dominant base station to said macro cell boundary.

**9.** The method of claim 7, wherein said step of determining comprises calculating said maximum downlink transmission power in accordance with the algorithm:

$$P_{dl} = \min\left\{ \left( \frac{P_{int\,bound}}{n_{femto}} \right) + L_{est}, P_{dl\,max} \right\}$$

where $P_{dl}$ is said maximum downlink transmission power for said downlink signal, $P_{intbound}$ is the predetermined downlink interference threshold allowable at said macro cell boundary, $n_{femto}$ is an indication of the number of femto cells contributing to interference at said boundary, $L_{est}$ is the downlink path loss estimated to the boundary and $P_{dlmax}$ is a predetermined maximum downlink transmission power.

**10.** The method of claim 1, wherein said step of determining said at least one macro cell frequency channel comprises:

receiving an indication of said at least one macro cell frequency channel from a femto cell gateway server.

**11.** A computer program product operable, when executed on a computer, to perform the method steps of claim 1.

**12.** A femto base station (30; 34; 38; 42) operable to allocate frequency channels for transmissions with user equipment (44) within a femto cell (32; 34; 40; 46), said femto cell being located within a local macro cell (24) of a wireless telecommunications network (10), said wireless telecommunications supporting transmissions over a plurality of predetermined frequency channels, said femto base station comprising:

determining logic operable to determine at least one macro cell frequency channel from said plurality of predetermined frequency channels currently allocated for transmissions within said local macro cell between other user equipment and a macro base station supporting that local macro cell; and

allocating logic operable to allocate at least one femto cell frequency channel from said plurality of predetermined frequency channels which differs from said at least one macro cell frequency channel for transmissions within said femto cell between said user equipment and said femto base station, wherein the allocating logic is operable to allocate the at least one femto cell frequency channel to support transmission of an uplink and a downlink signal between the user equipment and the femto base station and determine a maximum downlink transmission power for the downlink signal which limits downlink interference received at a macro cell boundary between the local macro cell and a macro cell supported by the macro base station currently utilising that frequency channel for transmissions with other user equipment to below a predetermined downlink interference threshold.

FIG. 1

FIG. 2

FIG. 3

START

INITIALISE ⎯ S10

MONITOR
BCCHs ⎯ S20

DETERMINE
USE & REUSE ⎯ S30
CHANNELS

CALCULATE
POWERS AND ⎯ S40
ALLOCATE
UPLINK

CALCULATE
POWERS AND ⎯ S50
ALLOCATE
DOWNLINK

END

FIG. 4

|← D1 →|← D2-D1 →|

|← D2 →|

BS$_2$
•

42

BOUNDARY

FIG. 5

Determining Macrocell boundary distance

```
                    ┌─────────┐
                    │  Start  │
                    └─────────┘
                         │
                         ▼
            ┌──────────────────────────┐        D2 is the distance estimate from the
            │ Estimate femtocell distance │      macrocell bs to the femtocell site
       S1   │   from macrocell BS        │
            └──────────────────────────┘
                         │
                         ▼
            ┌──────────────────────────┐        Taken as measurements of the BCCH.
            │ Determine received signal  │       This is the channel with the highest
            │     power (Rx) and         │       transmit power
       S2   │ interference power (Ix) at │
            │     femtocell site         │
            └──────────────────────────┘
                         │
                         ▼
            ┌──────────────────────────┐        SINR = function (Rx, Ix, noise)
            │   Calculate SINR for       │
       S3   │   frequency group          │
            └──────────────────────────┘
                         │                        Boundary SINR being the minimum
                         ▼                        SINR required for a link, below
                    ◇◇◇◇◇◇◇◇◇◇                    which no macrocell ms can operate
                  ◇  Compare to  ◇
       S4        ◇  boundary SINR ◇
                  ◇    (9dB)     ◇
                    ◇◇◇◇◇◇◇◇◇◇
                         │                        For a fixed frequency and a fixed
                         ▼                        environment the Rx and Ix are only
            ┌──────────────────────────┐         a function of the pathloss.  Change
            │ Determine Change in Rx     │        in Rx and Ix equal the change
            │  and Ix needed to not      │        in pathloss needed
       S5   │  exceed boundary SINR      │
            └──────────────────────────┘
                         │
                         ▼                        PL1 is the pathloss from the macrocell
            ┌──────────────────────────┐         base station to its closest boundary
            │ PL to boundary (PL1) =     │
            │   PL to femto (PL2) -      │
       S6   │  Change in Rx/Ix needed    │
            └──────────────────────────┘
                         │                        D1 is the distance from the macrocell
                         ▼                        base station to its boundary
            ┌──────────────────────────┐
       S7   │    D1 = function (PL1)     │
            └──────────────────────────┘
                         │                        Distance from macrocell BS to boundary
                         ▼                        minus distance from macrocell BS to
            ┌──────────────────────────┐         femtocell equals distance from
            │        D2 - D1            │          femtocell to boundary
            │          =               │
       S8   │ distance from femtocell to │
            │   macrocell boundary       │
            └──────────────────────────┘
                         │
                         ▼
                    ┌─────────┐
                    │   End   │
                    └─────────┘
```

FIG. 6

FIG. 7

EP 2 219 399 A1

Received power at macrocell boundary = -85.5 dB (P1)
Received power at femtocell site = -90 dB (P2)

SINR at macrocell boundary = 9 dB (P1)
SINR at femtocell site = 0 dB (P2)

FIG. 8

FIG. 9

Europäisches
Patentamt

European
Patent Office

Office européen
des brevets

# EUROPEAN SEARCH REPORT

**Application Number**

EP 09 36 0012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 405 048 B1 (HAARTSEN JACOBUS C [NL]) 11 June 2002 (2002-06-11) | 1-3,12, 13 | INV. H04W16/10 |
| Y | * abstract * * column 3, lines 25-56; figures 1,4-7 * * column 6, line 32 - column 8, line 48 * | 4-11 | ADD. H04W16/14 |
| X | WO 96/31075 A (NORTHERN TELECOM LTD [CA]) 3 October 1996 (1996-10-03) * abstract * | 1 | |
| X | GB 2 404 113 A (MOTOROLA INC [US] MOTOROLA INC [US]; MOTOROLA INC [US]) 19 January 2005 (2005-01-19) * page 6, line 5 - page 8, line 9 * | 1-3 | |
| X | US 2007/097939 A1 (NYLANDER TOMAS [SE] ET AL) 3 May 2007 (2007-05-03) * claims 1-8 * | 1 | |
| Y | HOLGER CLAUSSEN: "Co-Channel Operation of Macro and Femtocells in a Hierarchical Cell Structure" INTERNATIONAL JOURNAL OF WIRELESS INFORMATION NETWORKS, KLUWER ACADEMIC PUBLISHERS-PLENUM PUBLISHERS, NE, vol. 15, no. 3-4, 25 September 2008 (2008-09-25), pages 137-147, XP019643406 ISSN: 1572-8129 2.1.1 Downlink power configuration 2.1.2 Uplink power configuration * abstract * | 4-11 | TECHNICAL FIELDS SEARCHED (IPC) H04W |
| A | US 2008/146154 A1 (CLAUSSEN HOLGER [GB] ET AL) 19 June 2008 (2008-06-19) * paragraphs [0005] - [0008] - paragraphs [0017] - [0029] * | 4-11 | |

-/--

The present search report has been drawn up for all claims

| Place of search | Date of completion of the search | Examiner |
|---|---|---|
| Munich | 7 October 2009 | Wolf, William |

EPO FORM 1503 03.82 (P04C01)

Europäisches
Patentamt

European
Patent Office

Office européen
des brevets

# EUROPEAN SEARCH REPORT

**Application Number**

EP 09 36 0012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GB 2 450 123 A (MOTOROLA INC [US]) 17 December 2008 (2008-12-17) * page 8, line 18 - page 14, line 6; figure 2 * ----- | 11 | |

TECHNICAL FIELDS
SEARCHED      (IPC)

The present search report has been drawn up for all claims

| Place of search | Date of completion of the search | Examiner |
|---|---|---|
| Munich | 7 October 2009 | Wolf, William |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

<table>
<tr><td>Europäisches<br>Patentamt<br>European<br>Patent Office<br>Office européen<br>des brevets</td><td align="right">Application Number<br><br>EP 09 36 0012</td></tr>
</table>

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 09 36 0012

The Search Division considers that the present European patent application does not comply with the
requirements of unity of invention and relates to several inventions or groups of inventions, namely:

    1. claims: 1-3,12-13

        Allocation of frequency channels for transmission within a
        femto cell
              ---

    2. claims: 4-11

        Determination of maximum transmission power to be used in a
        femto cell
              ---

## ANNEX TO THE EUROPEAN SEARCH REPORT
## ON EUROPEAN PATENT APPLICATION NO.

EP 09 36 0012

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2009

| Patent document cited in search report | | Publication date | Patent family member(s) | | Publication date |
|---|---|---|---|---|---|
| US 6405048 | B1 | 11-06-2002 | NONE | | |
| WO 9631075 | A | 03-10-1996 | CA | 2190857 A1 | 03-10-1996 |
| | | | EP | 0761069 A1 | 12-03-1997 |
| | | | JP | 9506756 T | 30-06-1997 |
| | | | US | 5828963 A | 27-10-1998 |
| GB 2404113 | A | 19-01-2005 | WO | 2005006798 A1 | 20-01-2005 |
| US 2007097939 | A1 | 03-05-2007 | NONE | | |
| US 2008146154 | A1 | 19-06-2008 | EP | 2095531 A2 | 02-09-2009 |
| | | | WO | 2008076219 A2 | 26-06-2008 |
| GB 2450123 | A | 17-12-2008 | NONE | | |

EPO FORM P0459

For more details about this annex : see Official Journal of the European Patent Office, No. 12/82